(19)

**Europäisches Patentamt**

**European Patent Office**

**Office européen des brevets**

(11) **EP 4 672 831 A1**

(12) **EUROPEAN PATENT APPLICATION**

(43) Date of publication:
**31.12.2025 Bulletin 2026/01**

(21) Application number: **24185004.9**

(22) Date of filing: **27.06.2024**

(51) International Patent Classification (IPC):
***H04W 56/00*** *(2009.01)*

(52) Cooperative Patent Classification (CPC):
**H04W 56/0045**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Deutsche Telekom AG**
**53113 Bonn (DE)**

(72) Inventor: **KLENNER, Matthias**
**53227 Bonn (DE)**

(74) Representative: **2SPL Patentanwälte PartG mbB**
**Landaubogen 3**
**81373 München (DE)**

Remarks:
Amended claims in accordance with Rule 137(2) EPC.

(54) **METHOD FOR MANAGING A CONNECTION IN A MOBILE TELECOMMUNICATIONS SYSTEM, APPARATUS FOR A BASE STATION, BASE STATION, AND MOBILE TELECOMMUNICATIONS SYSTEM**

(57)    Provided is a method (1) for managing a connection in a mobile telecommunications system (10), the method (1) including:

determining (2) a signaling delay between a user equipment, UE (30), and a base station (20) of the mobile telecommunications system (10);

determining (3) if the signaling delay is above a predetermined threshold; and

if the signaling delay is above the predetermined threshold:

scheduling (4), based on the signaling delay and for the UE (30), a UE transmission symbol pattern;

using (5), based on the signaling delay and for the base station (20), a base station reception symbol pattern, wherein

a beginning of the UE transmission symbol pattern is offset with respect to a beginning of the base station reception symbol pattern by at least one symbol (53).

FIG. 1

## Description

### Field

The present disclosure relates to a method for managing a connection in a mobile telecommunications system, an apparatus for a base station of a mobile telecommunications system, a base station of a mobile telecommunications system, and a mobile telecommunications system, more particularly, but not exclusively, to a concept for compensating high delays that might occur in a relaying chain.

### Background

Mobile communication systems have revolutionized the way we connect with others and access information on the go. These systems enable users to communicate through voice calls, text messages, and internet services using mobile devices such as smartphones and tablets. With the advancements in technology, mobile communication systems become increasingly faster, more reliable, and accessible to a larger population worldwide.

One of the key features of mobile communication systems is their ability to provide seamless connectivity regardless of geographical location. Whether you are traveling, working remotely, or simply on the move, mobile networks ensure that you stay connected with your friends, family, and colleagues. This level of connectivity has greatly enhanced communication and collaboration, enabling businesses to operate efficiently and individuals to stay in touch with their loved ones at all times.

Moreover, mobile communication systems have also played a significant role in driving economic growth and development. Through mobile banking, e-commerce, and online services, individuals can access financial services, make purchases, and carry out transactions easily using their mobile devices. This has not only improved convenience for consumers but has also opened up new opportunities for businesses to reach a wider audience and expand their market reach. As mobile communication systems continue to evolve, we can expect further innovations that will further transform the way we communicate and conduct business in the digital age.

Mobile communication networks such as public land mobile networks (PLMNs) are typically realized as cellular mobile communication networks. Such cellular systems are known to conform to different mobile communication standards or radio access technologies, which are also referred to as generations of mobile communication systems or standards. Examples are 2G/3G/4G/5G (G indicates Generation) radio access technologies and typically comprise cells of one or more radio access technologies. Such mobile communication networks that are purely or predominantly based on terrestrial infrastructures of the radio access network (terrestrial networks or TN-networks) are typically organized throughout a country (or a part of or a region within a country) in a repeating pattern of typically stationary cells (and associated base station entities), which typically belong to a mobile network operator (MNO).

In a typical coverage area of a mobile communication system, there are regions of different service quality, which may be caused by radio conditions, network load, grade of reflections, etc. Hence, service quality may vary based on user location, network load and other parameters. For example, there can also be regions or areas in which no coverage is possible/available by one mobile communication system (coverage hole) but by another, which is, for example, operated by another MNO.

### Summary

It has been recognized that in certain circumstances, a connection between a base station and a user equipment (UE) is not established if a delay is too high. For example, if a chip of a UE is configured with a security loop (e.g., due to stability problems) to abort the connection when a delay is above a predetermined threshold, for instance based on a preset zero correlation zone configuration of a cell and a resulting expected delay/cell range, a UE may not be able to connect to the base station (e.g., directly or via a repeater in a 5G network). A delay may be too high if the UE is at a cell edge, in a relaying chain with one or more repeaters, in a subway, a tunnel, or the like.

For example, in systems that are not suitable for high delays, such as systems that are based on time-division duplexing (TDD) with a DDDSU configuration (DDDSU: three downlink (D) slots, followed by a special/switching (S) slot, followed by an uplink (U) slot), a (5G) connection might not be established.

On the other hand, due to the expected high data rate in 5G networks (e.g., 5G NR (new radio)), TDD may be necessary because of the available frequency spectrum, but it has been recognized that connectivity problems may arise during initial access since the delay might not be known to the system or network.

It has thus been recognized that it may be desirable to establish a connection in such circumstances without the need to provide different hardware.

If a delay is present, it is known to compensate the delay based on a guard period between uplink and downlink. During an initial access procedure, the UE is notified of a timing advance according to which the UE is supposed to send the data earlier, such that they arrive at the base station at a predetermined time slot. In such an implementation, the downlink is typically shortened in case of high delay scenarios to increase the guard period and thus, compensate for delays. For example, a special slot configuration may be changed (e.g., from a 10:2:2 configuration (10 DL symbols, 2 guard symbols, 2 UL symbols) to a 9:3:2 configuration (9 DL symbols, 3 guard symbols, 2 UL symbols)).

However, it has been recognized that it may be desirable to keep as much downlink capacity as possible and thus, according to the present disclosure, an uplink may be shortened at an end of a slot. Hence, according to the present disclosure, a scheduler of a base station may determine, based on a delay, how many uplink symbols a UE may use (or how many symbols cannot be used anymore) and also determine at which symbol position the assigned symbols arrive at the base station.

Therefore, some embodiments pertain to a method for managing a connection in a mobile telecommunications system. The method comprises determining a signaling delay between a user equipment, UE, and a base station of the mobile telecommunications system and determining if the signaling delay is above a predetermined threshold. If the signaling delay is above the predetermined threshold the method further comprises scheduling, based on the signaling delay and for the UE, a UE transmission symbol pattern and using, based on the signaling delay and for the base station, a base station reception symbol pattern. A beginning of the UE transmission symbol pattern is offset with respect to a beginning of the base station reception symbol pattern by at least one symbol.

Thereby, the reported timing advance is reduced and a major part of the delay is hidden from the UE. Thus, a connection can be established although the delay would be too high for some UE chipsets.

According to the present disclosure, the configured cell range and/or zero correlation zone may be decreased, such that more codes may be available for a simultaneous initial access.

Moreover, synchronization of the UE with the network may be improved such that less UE-to-UE interference may be achieved.

In some embodiments, the UE transmission symbol pattern includes (or indicates) the beginning of the UE transmission symbol pattern and a number of transmission symbols.

Hence, the UE transmission symbol pattern is scheduled (and a length is determined) such that it falls within a predetermined part of the uplink slot as expected/scheduled by the base station, i.e., the base station reception symbol pattern.

In some embodiments, the scheduling includes shortening a standard symbol pattern at least by the offset, thereby obtaining the UE transmission symbol pattern.

In a (usual/typical) DDDSU pattern, each slot may have a predetermined number of symbols. According to the present disclosure, the U slot may be scheduled to be shortened at an end, such that the UE has a lower number of symbols to use and such that the base station will not receive symbols of the U slot in the following D slot.

Hence, in some embodiments, the standard symbol pattern is shortened at an end, such that received symbols of the UE transmission symbol pattern, which the base station receives from the UE, only lie in a predefined uplink slot.

In some embodiments, the method further includes matching a position of each symbol of the UE transmission symbol pattern to a (concrete) respective symbol position of the base station reception symbol pattern. In some embodiments, the scheduler of the base station (to be discussed below) is configured to carry out such a matching.

In some embodiments, the UE transmission symbol pattern overlaps into a region of the base station reception symbol pattern. In such embodiments, the method may further comprise configuring the UE to transmit a reference signal and uplink control information for the overlapping region.

Thereby, it can be ensured that the uplink signal is received at the predetermined time slot that is foreseen for the uplink signal by the base station and that the reference signals as well as the control information only lie in the uplink slot (and not too early or too late).

In some embodiments, the method further comprises reducing a maximum payload data rate for the UE in accordance with the offset.

Thereby, only payload is sent which the base station can really receive and no unnecessary data is transmitted in the uplink which possibly may need to be resent.

In some embodiments, the delay is determined during a random access procedure.

For example, the delay may be determined according to a zero-correlation zone procedure such that the base station already is informed of the delay before the data connection is established.

In some embodiments, the method further comprises signaling a timing advance to the UE to align symbol transitions of the UE transmission symbol pattern and the base station reception symbol pattern.

Hence, the present disclosure uses the (known) timing advance for aligning the symbol positions (in contrast to what the timing advance is known to be used for), such that the UE transmission symbol pattern fits to the base station reception symbol pattern and thus, it is not necessary to post-process the received UE transmission symbol pattern at the base station, thereby saving processing power.

In some embodiments, the delay is partially determined by the repeater and reported to the base station by an interface of the repeater. In combination with a random access procedure, a separation between air propagation delay and system/processing delay may be possible.

Also, in some embodiments, the offset is determined based on the timing advance and based on the delay. For example, the overall offset may be determined to compensate for the delay and further to align symbol transitions of the respective symbol patterns. Additionally or alternatively, the offset may be determined based on the threshold and the delay (and/or the timing advance).

In some embodiments, the base station reception symbol pattern has a fixed number of symbols. On the other hand, as apparent from the present disclosure, if the delay is above the predetermined threshold, the UE transmission symbol pattern has a dynamic number of symbols, such that it fits to the base station reception symbol pattern.

Some embodiments pertain to a computer program having program code for performing the methods according to the present disclosure, when the computer program is executed on a computer, a processor, or a programmable hardware component.

Some embodiments pertain to an apparatus for a base station of a mobile telecommunications system, the apparatus comprising processing circuitry configured to carry out the methods according to the present disclosure.

Some embodiments pertain to a base station of a mobile telecommunications system, the base station comprising an apparatus according to the present disclosure.

Some embodiments pertain to a mobile telecommunications system comprising a base station according to the present disclosure and at least one user equipment.

In some embodiments, the mobile telecommunications system further comprises at least one repeater and is further configured to establish/manage a radio connection between the base station and the at least one user equipment via the at least one repeater.

Hence, as already discussed above, according to the present disclosure, a connection may be established/managed via a repeater, possibly inducing a high delay, even though the UE has a function to abort the connection if the delay is too high.

**Brief description of the Figures**

Some examples of apparatuses and/or methods will be described in the following by way of example only, and with reference to the accompanying figures, in which

Fig. 1 depicts a method for managing a connection in a mobile telecommunications system according to the present disclosure;

Fig. 2 depicts a base station, a repeater, user equipment, and a mobile telecommunications system according to the present disclosure; and

Fig. 3 depicts a timing diagram for explaining the principles of the present disclosure.

**Detailed Description**

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

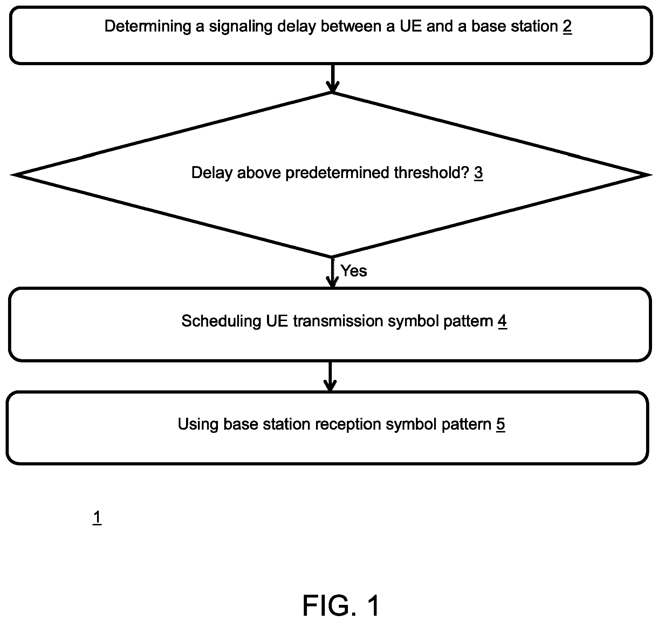

Fig. 1 depicts a block diagram of a method 1 for managing a connection in a mobile telecommunications system/network according to the present disclosure. The method 1 includes determining 2 a signal delay between a UE and a base station. It is then determined, if the delay is above a predetermined threshold. If the delay is above a predetermined threshold, 3, a UE transmission symbol pattern is scheduled 4 for the UE based on the signaling delay. Moreover, a base station reception symbol pattern is used 5 for the base station based on the signaling delay. A beginning of the UE transmission symbol pattern is offset, in some embodiments, with respect to a beginning of the base station reception symbol pattern by at least one symbol.

It should be noted that, if the delay is determined to be not above the predetermined threshold, a connection may be managed as it is commonly known. However, this process is not depicted. Also, in some embodiments, the method starts anew, if the delay is determined to be below the predetermined threshold, such that the present disclosure may be applied in cases when the delay becomes too high.

The method 1 may be carried out based on different entities. For example, there may be various ways that a signaling delay is determined. If a random access procedure is used (such as via a physical random access channel, PRACH, cf. 3GPP TS (Technical Specification) 38.321 V18.1.0 (2024-03), Technical Specification Group Radio Access Network; NR; Medium Access Control (MAC) protocol specification), the base station may be unaware when a UE is trying to establish a connection. Hence, the delay may be determined by the base station with support of the UE by decoding a corresponding signal via the PRACH. For example, orthogonal codes defined by a zero-correlation zone may be used, as commonly known.

The base station may determine whether the delay is above the predetermined threshold. On the other hand, this may alternatively be carried out by the UE. However, in order to not introduce additional delay, the base station may carry out that evaluation, such that the scheduling may be carried out immediately afterwards.

In some embodiments, the UE-type and its capability are not known until the initial access procedure is finished. The base station may start with a predefined pattern supported by all UEs and adjust the individual pattern and timing advance per UE (or per group of UEs, in some embodiments) at a later stage, thereby minimizing the overall performance impact in the cell.

As mentioned above, if the signaling delay is above the predetermined threshold, for example a scheduler of the base station, may schedule a UE transmission symbol pattern. Furthermore, the base station (e.g., the scheduler) may use a base station reception symbol pattern.

As it is commonly known, in a DDDSU configuration (in TDD), each slot may include a predetermined number of symbols. For further details, please see 3GPP TS 38.521-1 V18.2.0 (2024-03), Technical Specification Group Radio Access Network; NR; User Equipment (UE) conformance specification; Radio transmission and reception; Part 1: Range 1 Standalone; (Release 18). However, if the delay is too high and the UE uses each symbol of the slot, some symbols may arrive at the base station in the subsequent downlink slot, if the principles of the present disclosure are not applied.

Therefore, the scheduler may assign a symbol position at which the UE is allowed to begin the uplink transmission and at the same time, internally assign that symbol position to an internal symbol position. For example, the scheduler may schedule the first symbol of the uplink slot for the UE to start transmission, but at the same time assign the eighth symbol of the (regular) uplink slot as an expected beginning of the incoming uplink transmission. Since only a limited number of symbols is available, the scheduler may also schedule a predetermined number of symbols for the UE, such as seven (if the slot has a capacity of fourteen symbols).

Hence, the UE may get a UE transmission symbol pattern that has the following properties:

- First symbol to be used: Symbol number one
- Total amount of symbols to be used: seven

This corresponds to a base station reception symbol pattern as follows:

- First symbol to receive: Symbol number eight (symbol numbers one to seven are still considered and belong to the base station reception symbol pattern, in some embodiments)
- Total amount of symbols to be used: seven filled symbols, but fourteen symbols in total

However, the present disclosure is not limited to the case that, if a symbol is used, all subsequent symbols of the slot must be used, as well. For example, only each second symbol may be used, or an arbitrary number and ordering of symbols may be used, as long as the received signal does not overlap into the downlink slot.

Hence, in some embodiments, the UE transmission symbol pattern includes the beginning of the UE transmission symbol pattern and a number of transmission symbols.

In some embodiments, the scheduling includes shortening a standard symbol pattern at least by the offset, thereby obtaining the UE transmission symbol pattern. The standard symbol pattern may refer to a use of all the symbols of a slot, as discussed herein.

In some embodiments, the standard symbol pattern is shortened at an end, such that received symbols of the UE transmission symbol pattern, which the base station receives from the UE, only lie in a predefined uplink slot, as discussed herein.

As discussed above, the UE transmission symbol pattern may be scheduled such that the transmitted symbols may lie in the uplink slot. However, the base station expects the received symbols to lie at a different position than the UE is scheduled to (also referred to as "overlap" of the patterns). Hence, in some embodiments, the UE transmission symbol pattern overlaps into a region of the base station reception symbol pattern. In such embodiments, the method may further include: configuring the UE to transmit a reference signal and uplink control information for the overlapping region.

Hence, it may be ensured that the reference signals (e.g., DM-RS, SRS, or the like) and the uplink control information (e.g., via a physical uplink control channel, PUCCH), which may be necessary for the base station to continue communication with the UE, is received during the uplink slot (and not too late). Further details are described in 3GPP TS 38.213 V18.2.0 (2024-03), Technical Specification Group Radio Access Network; NR; Physical layer procedures for control (Release 18). In some embodiments, the PUCCH may be configured according to the following condition:

Start symbol ≤ 14 – "offset symbols in UL slot" – "PUCCH length" +1

Further, in order to decrease signaling overhead, a maximum payload data rate for the UE may be decreased in accordance with the offset. Hence, in some embodiments, the method further includes: reducing a maximum payload data rate for the UE in accordance with the offset.

As already mentioned above, in some embodiments, the delay is determined during a random access procedure. Additionally or alternatively, the delay may partially be determined by another entity or component influencing a signal propagation path with a fixed delay (e.g. at least one repeater).

In some embodiments, the method further includes: signaling a timing advance to the UE to align symbol transitions of the UE transmission symbol pattern and the base station reception symbol pattern.

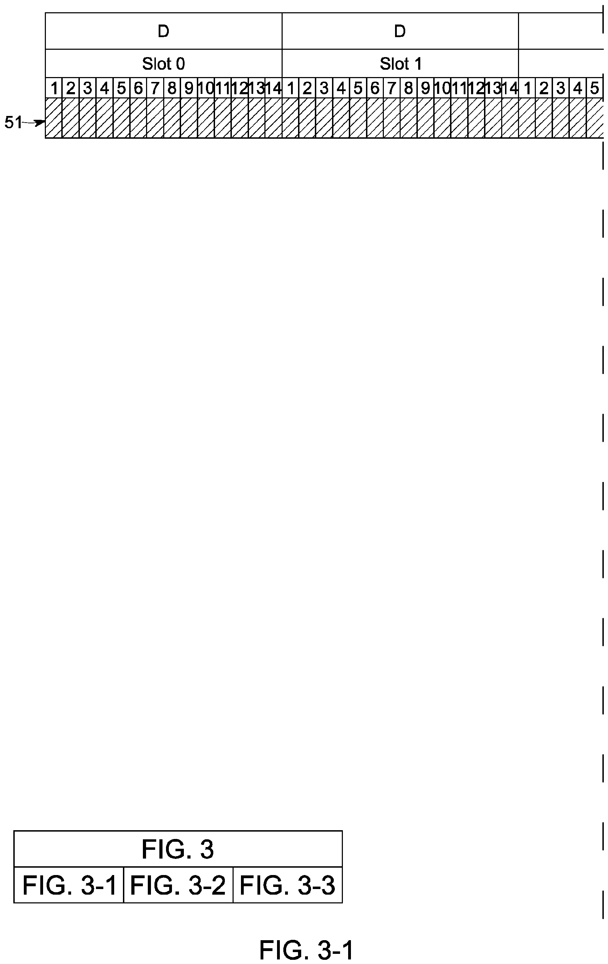

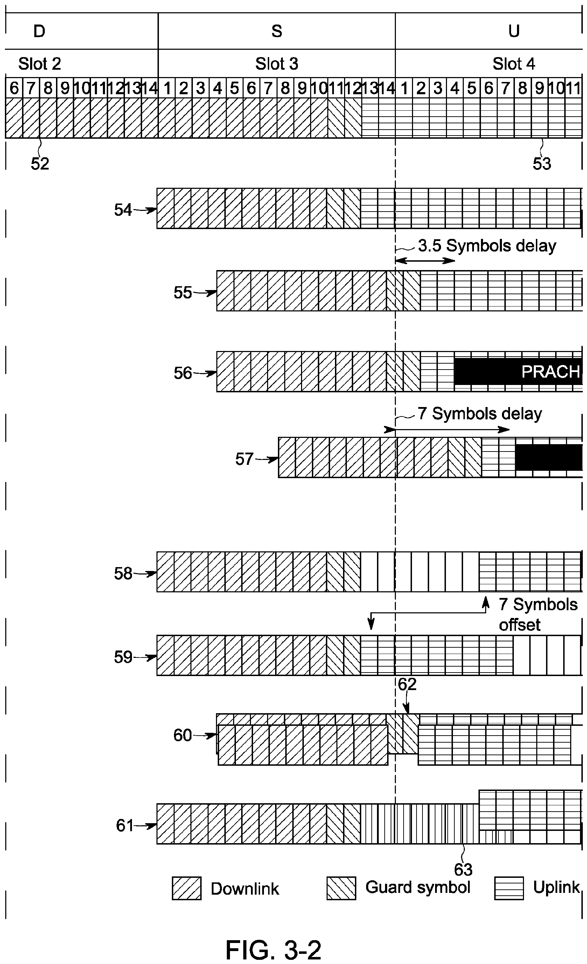

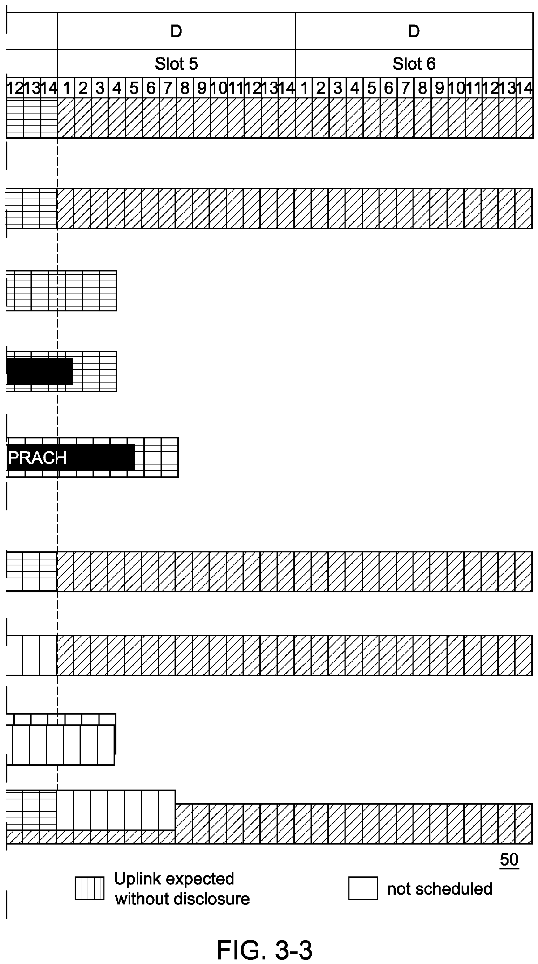

Generally, timing advance is already known. However, it is commonly used for configuring the UE to start the transmission ahead of the actual uplink slot, such that the uplink may start at the first symbol. However, according to the present disclosure, it has been recognized that depending on the delay, symbol borders or symbol transitions of the UE transmission symbol pattern and the base station reception symbol pattern may not necessarily align. Therefore, the timing advance is used such that the symbol patterns align with each other (which will also be discussed with reference to Fig. 3). If timing advance is used, the offset may further be determined based on the timing advance (in addition to the delay).

As already discussed herein, the base station reception symbol pattern may have a fixed number of symbols. In contrast to that, if the delay is above the predetermined threshold, it may depend on the delay (and the timing advance, in some embodiments), how many symbols the UE transmission symbol pattern has. Hence, the UE transmission symbol pattern may be considered dynamic.

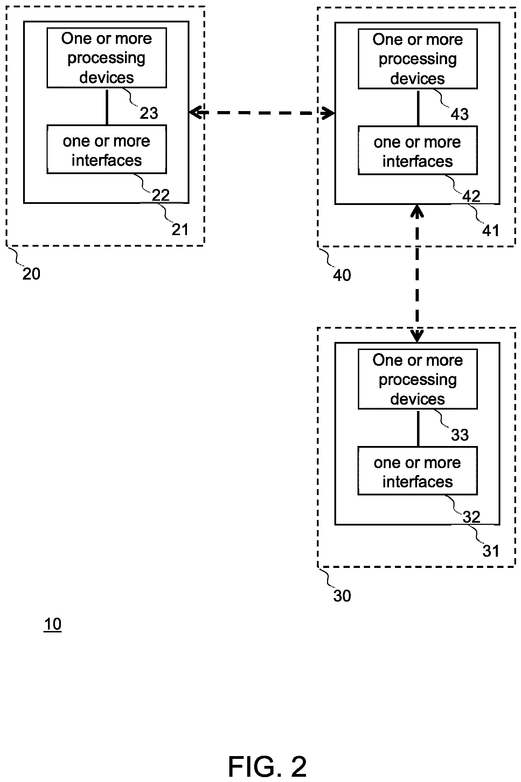

Fig. 2 shows a block diagram of a mobile communications system/network 10 including examples of a base station 20, a UE 30, and a repeater 40, thereby constituting by an active distributed antenna system (aDAS), in some embodiments.

The base station 20 of the mobile communication system 10 includes circuitry 21 (or: an apparatus for a base station) including one or more interfaces 22, which are configured to communicate in the mobile communication system 10. The one or more interfaces 22 are coupled to one or more processing devices 23, which are configured to perform one of the methods described herein.

The UE 30 of the mobile communication system 10 includes circuitry 31 including one or more interfaces 32, which are configured to communicate in the mobile communication system 10. The one or more interfaces 32 are coupled to one or more processing devices 33, which are configured to carry out a random access procedure, as described herein.

The repeater 40 of the mobile communication system 10 includes circuitry 41 including one or more interfaces 42, which are configured to communicate in the mobile communication system 10. The one or more interfaces 42 are coupled to one or more processing devices 43, which are configured to connect the base station 20 with the UE 30. It should be noted that the present disclosure is not limited to the case that the connection is established via a repeater and the principles discussed herein can equally be applied when the connection is established directly between the base station 20 and the UE 30.

As illustrated in Fig. 2, the respective one or more processing devices 23, 33, and 43 are coupled to the respective one or more interfaces 22, 32, and 42. The one or more interfaces 22, 32, and 42 may correspond to one or more inputs and/or outputs for receiving and/or transmitting information, which may be in digital (bit) values according to a specified code or protocol, within a module, between modules or between modules of different entities. For example, an interface 22, 32, and/or 42 may comprise interface circuitry configured to receive and/or transmit information/data. In examples, an interface 22, 32, 42 may correspond to any means for obtaining, receiving, transmitting or providing analog or digital signals or information, e.g., any connector, contact, pin, register, input port, output port, conductor, lane, etc., which allows providing or obtaining a signal or information. An interface 22, 32, 42 may be configured to communicate (transmit, receive, or both) in a wireless or wireline manner and it may be configured to communicate, i.e., transmit and/or receive signals, information with further internal or external components. The one or more interfaces 22, 32, 42 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

The one or more processing devices 23, 33, 43 may be implemented using one or more processing units, one or more circuitries, any means for processing, such as a processor, a computer or a programmable hardware component being operable with accordingly adapted software. In other words, the described function of the one or more processing devices 23, 33, 43 may as well be implemented in software, which is then executed on one or more programmable hardware components. Such hardware components may comprise a general-purpose processor, a Digital Signal Processor (DSP), a micro-controller, etc.

In examples, measurements may be carried out by UEs, mobile terminals, or communication devices, which may communicate in the mobile communication system with the network entity, e.g., one or more cells generated by the base station 20 and/or the repeater 40. For example, the communication device and the network entity may communicate in/via a mobile communication system. The mobile communication system may comprise a plurality of transmission points and/or base stations operable to communicate radio signals with the communication device. In an example, the mobile communication system may comprise the communication device and the network entity.

A network entity, e.g., the network entity 20 or 40, can be located in the fixed or stationary part of the network or system. A network entity may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A network entity can be a wireless interface of a wired network, which enables transmission and reception of radio signals to a communication device. Such a radio signal may comply with radio signals as, for example, standardized by 3GPP or, generally, in line with one or more of the above listed systems. Thus, a network entity or a base station may correspond to, a NodeB, an eNodeB, a gNodeB, a BTS (Base Transceiver Station), an access point, etc.

The mobile communication system 10 may be cellular. The term cell refers to a coverage area of radio services provided by a transmission point, a remote unit, a remote head, a remote radio head, communication device, network entity or a NodeB, an eNodeB, a gNodeB, respectively. The terms cell and base station may be used synonymously, a base station may generate multiple cells. A wireless communication device, e.g., the communication device, can be registered or associated with at least one cell (e.g., the network entity), e.g., it can be associated to a cell such that data can be exchanged between the network and the mobile in the coverage area of the associated cell using a dedicated channel, connection or link.

In general, the communication device is a device that is capable of communicating wirelessly. In particular, however, the communication device may be a mobile communication device, e.g., a communication device that is suitable for being carried around by a user. For example, the communication device may be a User Terminal (UT) or User Equipment (UE) within the meaning of the respective communication standards being used for mobile communication. For example, the communication device, e.g., the UE 30, may be a mobile phone, such as a smartphone, or another type of mobile communication device, such as a smartwatch, a laptop computer, a tablet computer, or autonomous augmented-reality glasses. For example, the communication device and the network entity may be configured to communicate in a (cellular) mobile communication system, for example in a Sub-6GHz-based cellular mobile communication system (covering frequency bands between 500 MHz and 6 GHz) or in a mmWave-based cellular mobile communication system (covering frequency bands between 20 GHz and 60 GHz).

In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 6th Generation system (6G), a 5th Generation system (5G), a New Radio (NR) system, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

Fig. 3 depicts an exemplary timing diagram 50 according to the present disclosure as a DDDSU scheme with a 10:2:2 special slot configuration.

In the DDDSU scheme, three downlink slots (D) are followed by a special/switch slot (S), which is followed by an uplink slot (U). After that, the scheme is repeated from the beginning. As depicted in Fig. 3, the slots are numbered, but the numbering is only provided for illustrational purposes. Each slot has fourteen symbols, wherein a symbol is representative of data that is sent via a predetermined amount of subcarriers (e.g. 256, 512, or the like). It should be noted that fourteen symbols only serve as an example and the present disclosure is not limited to any number of symbols per slot.

The first row 51 of the timing diagram 50 depicts planned (scheduled) slots in a general way. Symbols 52 are scheduled as downlink symbols. Symbols on position 10 and 11 of slot 3 are not assigned to uplink or downlink (they are guard symbols), and symbols on positions 13 and 14 of slot 3 are scheduled as uplink symbols 53. Slot 4 then contains fourteen uplink symbols 53.

Row 51 shows the ideal case (standard pattern) without any delay and the most relevant parts of this ideal case is depicted again in row 54 below in the framework of the base station. However, row 55 depicts a case with a delay of 125 $\mu$s which roughly corresponds to three and a half symbols which the UE receives the schedule too late. Hence, the three and a half symbols are a one-way delay and a random access procedure via PRACH, as depicted by row 56, is thus sent approximately 125 $\mu$s (ca. 3.5 symbols) too late. As depicted by row 57, the random access preamble arrives approximately 250 $\mu$s (ca. seven symbols) too late at the base station. However, the random access takes twelve symbols, such that a major part of the random access preamble and the uplink data lies in the subsequent downlink slot.

Hence, rows 54 to 57 depict a part of a RACH (random access channel) procedure for initial access to determine a delay (which is 250 $\mu$s in this example).

Rows 58 to 61 depict the principles of UE transparent delay compensation according to the present disclosure.

As indicated above, at row 57, it is depicted that the initial access preamble is received at the gNB roughly seven symbols too late. This may still allow the gNB to determine the signalling delay. According to the present disclosure, the gNB is configured to determine a timing advance (TA) which corresponds to the measured delay modulo the length of one symbol (35 $\mu$s) in order to align the symbol transitions of the symbol patterns. Thus, the scheduler is configured to consider a scheduling offset of seven symbols, as depicted in rows 58 and 59 and also consider a TA of five microseconds.

Rows 58 and 59 depict a scheduling according to the present disclosure, wherein row 58 depicts a base station reception symbol pattern (as expected by the base station) and row 59 depicts a corresponding UE transmission symbol pattern (in a time grid of the base station).

Row 60 shows a resulting uplink/downlink pattern roughly 125 $\mu$s later (corresponding to the one-way delay) at the UE in the described delay scenario according to the present disclosure. As indicated by reference numeral 62 (and with a graphical displacement of the symbols/pattern), symbol transitions of the downlink reception by the UE (in slot 3) and the UE transmission symbol pattern are (slightly) shifted with respect to an assumed signal grid (and thus, also in relation to the base station reception symbol pattern) based on a configured timing advance for the UE. The timing advance that is reported to the UE corresponds to an end-to-end delay (or round-trip time, RTT) of 5 $\mu$s (as an example given herein). Moreover, the UE transmission symbol pattern is scheduled such that the last seven symbols are not used for the uplink (because the offset or remaining delay is seven symbols long).

Row 61 depicts incoming UL symbols (that arrive an additional 125 $\mu$s later compared to row 60) from the UE (as indicated with a graphical displacement in row 61) at the base station, thus matching the base station reception symbol pattern of row 58 according to the present disclosure. In addition to that, it is shown at which point of time the UL is expected at the base station without the application of the principles according to present disclosure (symbols with reference numeral 63) in a case that a connection is even established. According to the base station reception symbol pattern, in row 58, it is expected that the thirteenth symbol of slot 3 lies at symbol position 6 in slot 4, thus having an offset of seven symbols compared to the expected receive pattern 63 without the present disclosure.

Hence, the UE transmission symbol pattern overlaps with the base station reception symbol pattern and the UE transmission symbol pattern is scheduled such that no symbol lies in the subsequent downlink slot. In other words, the detection window of the base station is shifted compared to the transmission window, but the number of transmission symbols is shortened according to the shifted detection window. Additionally, reference signals and uplink control signals are transmitted in the overlapping symbols, as discussed herein. Hence, the control channels (PUCCH) or control signals as well as the reference signals are configured to the short format of the uplink slot (or UE transmission symbol pattern).

As can be taken from the present disclosure, a major part of the delay (apart from the TA to align the symbol transitions) is made transparent for the UE due to the scheduling scheme as discussed herein. An "offset compensation period" is added at the back of a pattern by not scheduling the symbols, such that they do not lie in a subsequent downlink slot.

It should be noted that 5G networks only serve as examples to which the present disclosure may be applied. However, the present disclosure is not limited to such systems and may be applied to other systems that use time-division multiplexing (or duplexing) with a scheme that includes uplink and downlink transmission.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1.  A method (1) for managing a connection in a mobile telecommunications system (10), the method (1) comprising:

    determining (2) a signaling delay between a user equipment, UE (30), and a base station (20) of the mobile telecommunications system (10);
    determining (3) if the signaling delay is above a predetermined threshold; and
    if the signaling delay is above the predetermined threshold:

    scheduling (4), based on the signaling delay and for the UE (30), a UE transmission symbol pattern;
    using (5), based on the signaling delay and for the base station (20), a base station reception symbol pattern, wherein
    a beginning of the UE transmission symbol pattern is offset with respect to a beginning of the base station reception symbol pattern by at least one symbol (53).

2.  The method of claim 1, wherein the UE transmission symbol pattern includes the beginning of the UE transmission symbol pattern and a number of transmission symbols (53).

3.  The method of claim 1 or 2, wherein the scheduling (4) includes shortening a standard symbol pattern at least by the offset, thereby obtaining the UE transmission symbol pattern.

4.  The method of claim 3, wherein the standard symbol pattern is shortened at an end, such that received symbols of the UE transmission symbol pattern, which the base station (20) receives from the UE (30), only lie in a predefined uplink slot.

5.  The method of any one of claims 1 to 4, wherein the UE transmission symbol pattern overlaps into a region of the base station reception symbol pattern, the method further comprising:

configuring the UE (30) to transmit a reference signal and uplink control information for the overlapping region.

6. The method of claim 1, further comprising:
   reducing a maximum payload data rate for the UE (30) in accordance with the offset.

7. The method of any one of claims 1 to 6, wherein the delay is determined during a random access procedure.

8. The method of any one of claims 1 to 7, further comprising:
   signaling a timing advance to the UE (30) to align symbol transitions of the UE transmission symbol pattern and the base station reception symbol pattern.

9. The method of claim 8, wherein the offset is determined based on the timing advance and based on the delay.

10. The method of any one of claims 1 to 9, wherein the base station reception symbol pattern has a fixed number of symbols (53).

11. A computer program having program code for performing the method according to any one of claims 1 to 10, when the computer program is executed on a computer, a processor, or a programmable hardware component.

12. An apparatus (21) for a base station (20) of a mobile telecommunications system (10), the apparatus (21) comprising processing circuitry configured to carry out the method of any one of claims 1 to 10.

13. A base station (20) of a mobile telecommunications system (10), the base station (20) comprising an apparatus (21) according to claim 12.

14. A mobile telecommunications system (10) comprising a base station (20) according to claim 13, and at least one user equipment (30).

15. The mobile telecommunications system (10) of claim 14, further comprising at least one repeater (40), wherein the mobile telecommunications system is further configured to establish a radio connection between the base station (20) and the at least one user equipment (30) via the at least one repeater (40).

**Amended claims in accordance with Rule 137(2) EPC.**

1. A method (1) for managing a connection in a mobile telecommunications system (10), the method (1) comprising:

   determining (2) a signaling delay between a user equipment, UE (30), and a base station (20) of the mobile telecommunications system (10);
   determining (3) if the signaling delay is above a predetermined threshold; and
   if the signaling delay is above the predetermined threshold:

   scheduling (4), based on the signaling delay and for the UE (30), a UE transmission symbol pattern, wherein the UE transmission symbol pattern includes the beginning of the UE transmission symbol pattern and a number of transmission symbols (53);
   using (5), based on the signaling delay and for the base station (20), a base station reception symbol pattern, wherein the base station reception symbol pattern includes an expected beginning of an incoming uplink transmission by the UE, wherein the expected beginning is a symbol that is different than the beginning of the UE transmission symbol pattern, such that
   a beginning of the UE transmission symbol pattern is offset with respect to a beginning of the base station reception symbol pattern by at least one symbol (53).

2. The method of claim 1, wherein the scheduling (4) includes shortening a standard symbol pattern at least by the offset, thereby obtaining the UE transmission symbol pattern.

3. The method of claim 2, wherein the standard symbol pattern is shortened at an end, such that received symbols of the UE transmission symbol pattern, which the base station (20) receives from the UE (30), only lie in a predefined uplink slot.

4. The method of any one of claims 1 to 3, wherein the UE transmission symbol pattern overlaps into a region of the base station reception symbol pattern, the method further comprising:
configuring the UE (30) to transmit a reference signal and uplink control information for the overlapping region.

5. The method of claim 1, further comprising:
reducing a maximum payload data rate for the UE (30) in accordance with the offset.

6. The method of any one of claims 1 to 5, wherein the delay is determined during a random access procedure.

7. The method of any one of claims 1 to 6, further comprising:
signaling a timing advance to the UE (30) to align symbol transitions of the UE transmission symbol pattern and the base station reception symbol pattern.

8. The method of claim 7, wherein the offset is determined based on the timing advance and based on the delay.

9. The method of any one of claims 1 to 8, wherein the base station reception symbol pattern has a fixed number of symbols (53).

10. A computer program having program code for performing the method according to any one of claims 1 to 9, when the computer program is executed on a computer, a processor, or a programmable hardware component.

11. An apparatus (21) for a base station (20) of a mobile telecommunications system (10), the apparatus (21) comprising processing circuitry configured to carry out the method of any one of claims 1 to 9.

12. A base station (20) of a mobile telecommunications system (10), the base station (20) comprising an apparatus (21) according to claim 11.

13. A mobile telecommunications system (10) comprising a base station (20) according to claim 13, and at least one user equipment (30).

14. The mobile telecommunications system (10) of claim 13, further comprising at least one repeater (40), wherein the mobile telecommunications system is further configured to establish a radio connection between the base station (20) and the at least one user equipment (30) via the at least one repeater (40).

Determining a signaling delay between a UE and a base station 2

Delay above predetermined threshold? 3

Yes

Scheduling UE transmission symbol pattern 4

Using base station reception symbol pattern 5

1

# FIG. 1

FIG. 2

| D | | D | |
|---|---|---|---|
| Slot 0 | | Slot 1 | |
| 1 2 3 4 5 6 7 8 9 10 11 12 13 14 | 1 2 3 4 5 6 7 8 9 10 11 12 13 14 | 1 2 3 4 5 | |

51→

| | FIG. 3 | |
|---|---|---|
| FIG. 3-1 | FIG. 3-2 | FIG. 3-3 |

FIG. 3-1

FIG. 3-2

FIG. 3-3

**EUROPEAN SEARCH REPORT**

Application Number

EP 24 18 5004

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 3 913 957 A1 (HUAWEI TECH CO LTD [CN]) 24 November 2021 (2021-11-24)<br>* paragraph [0110] *<br>* paragraph [0120] - paragraph [0129] *<br>* paragraph [0172] *<br>* figure 20 *<br>----- | 1-5,7-15<br><br>6 | INV.<br>H04W56/00 |
| | | | TECHNICAL FIELDS SEARCHED (IPC) |
| | | | H04W |

The present search report has been drawn up for all claims

| Place of search | Date of completion of the search | Examiner |
|---|---|---|
| The Hague | 5 December 2024 | Oechsner, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 5004

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2024

| Patent document cited in search report | | Publication date | Patent family member(s) | | Publication date |
|---|---|---|---|---|---|
| EP 3913957 | A1 | 24-11-2021 | CN | 111629385 A | 04-09-2020 |
| | | | EP | 3913957 A1 | 24-11-2021 |
| | | | WO | 2020173286 A1 | 03-09-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Technical Specification Group Radio Access Network. *3GPP TS 38.521-1 V18.2.0*, March 2024

- Technical Specification Group Radio Access Network; NR. *3GPP TS 38.213 V18.2.0*, March 2024